# EUROPÄISCHE PATENTSCHRIFT

(11) **EP 3 109 520 B1**
(45) Veröffentlichungstag und Bekanntmachung des Hinweises auf die Patenterteilung: **06.05.2020**
(21) Anmeldenummer: 15173497.7
(22) Anmeldetag: 24.06.2015
(51) Int. Cl.: F01D 11/00, F16J 15/44

(54) **DICHTUNGSTRÄGER, LEITSCHAUFELKRANZ UND STRÖMUNGSMASCHINE**
SEAL CARRIER, GUIDE BLADE ASSEMBLY AND FLUID FLOW ENGINE
SUPPORT D'ÉTANCHÉITÉ, STATOR ET TURBOMACHINE

(43) Veröffentlichungstag der Anmeldung: 28.12.2016
(73) Patentinhaber: MTU Aero Engines AG, 80995 München (DE)
(72) Erfinder: Jakimov, Andreas, 81245 München (DE); Scharl, Richard, 85757 Karlsfeld (DE); Schlothauer, Steffen, 85253 Erdweg (DE)

(56) Entgegenhaltungen:
- EP-A2- 2 236 763
- WO-A1-2007/134585
- WO-A1-2013/110792
- US-A1- 2004 239 040
- US-A1- 2009 148 277
- US-A1- 2009 304 497
- US-A1- 2014 037 445

## Beschreibung

Die Erfindung betrifft einen Segmentierter Dichtungsträger einer Strömungsmaschine nach dem Oberbegriff des Patentanspruchs 1, einen verstellbaren Leitschaufelkranz und eine Strömungsmaschine.

Der erfindungsgemäße Dichtungsträger wird beispielsweise wie folgt in einer Strömungsmaschine verwendet. Strömungsmaschinen wie Flugzeugtriebwerke und stationäre Gasturbinen haben zur Einstellung optimaler Betriebsbedingungen zumindest eine verdichterseitige verstellbare Leitschaufelreihe mit einer Vielzahl von um ihre Hochachse verschwenkbaren Leitschaufeln. Die Leitschaufelreihe bildet mit einem Innenring einen sogenannten verstellbaren Leitschaufelkranz. Der Innenring dient zur Stabilisierung bzw. radial inneren Lagerung der Leitschaufeln. Eine äußere Lagerung der Leitschaufeln sowie deren Betätigung erfolgt über Verstellzapfen der Leitschaufeln, die mit einer entsprechenden Verstelleinrichtung zusammenwirken. Auf den bzw. an dem Innenring ist ein Dichtungsträger geführt, der mit Dichtelementen bzw. Einlaufbelegen versehen ist, denen rotorseitige Dichtfins gegenüberliegen.

Grundsätzlich besteht die Gefahr des sogenannten Chording-Effekts. Der Chording-Effekt bedeutet eine thermische Verformung des Innenringes, da sich dessen heißgasseitige Außenseite stärker erwärmt als dessen Innenseite. Der Chording-Effekt kann dazu führen, dass die Segmente in ihren Kontaktbereichen bei transienten Betriebszuständen des Flugtriebwerks radial nach innen auf gegenüberliegende rotorseitige Dichtfins gedrückt werden, so dass es speziell an den Kontaktbereichen zu einem erhöhter Einlauf der Dichtfins in die Dichtelemente des Dichtungsträgers kommt. Dieser Verformung wird bei bekannten Dichtungsträgern versucht durch einer Verschraubung entgegenzuwirken. Eine Verschraubung ist jedoch verhältnismäßig aufwendig und erfordert Bau- bzw. Montageraum.

Druckschriftlicher Stand der Technik ist aus der WO 2013/110792 A1, WO 2007/134585 A1, US 2004/239040 A1 und aus der EP 2 236 763 A2 bekannt. Die WO 2013/110792 A1 zeigt ein Statorbauteil mit einem Außenring und einem Innenring. Der Innenring ist in Teilsegmente unterteilt, die radial innen mit Dichtelementen versehen sind. Seitlich sind die Teilsegmente derart ausgebildet, dass jeweils benachbarte Segmente keinen unmittelbaren Form- oder Kraftfluss bilden. Die MTU eigene WO 2007/134585 A1 offenbart einen segmentierten Dichtungsträger, deren Segmente zur Montage elastisch verformbar sind. Die US 2004/239040 A1 betrifft einen segmentierten Dichtungsträger mit einem äußeren. Ringabschnitt und einem inneren Ringabschnitt. Benachbarte Segmente liegen stumpf aneinander an und sind radial innen mit Dichtelementen wie Honigwabenstrukturen versehen. Die EP 2 236 763 A2 zeigt einen segmentierten Statorring, deren benachbarten Segmente formschlüssig zusammenwirken und die radial innen Dichtelemente tragen.

Es wird darauf hingewiesen, dass der vorgenannte Stand der Technik nur beispielhaft genannt ist und sich ein Dichtungsträger nicht auf die Anwendung in einem verstellbaren Leitschaufelkranz beschränkt.

Aufgabe der Erfindung ist es, einen segmentierten Dichtungsträger einer Strömungsmaschine zu schaffen, der eine zuverlässige Verbindung seiner Segmente ermöglicht, kompakt ausführbar sowie montagetechnisch mit geringem Aufwand zusammenzusetzen ist. Des Weiteren ist es Aufgabe der Erfindung, einen verstellbaren Leitschaufelkranz mit einem kompakten segmentierten Dichtungsträger und eine Strömungsmaschine zu schaffen, die einen hohen Verdichterwirkungsgrad aufweist.

Diese Aufgabe wird gelöst durch einen segmentierten Dichtungsträger mit den Merkmalen des Patentanspruchs 1, durch einen verstellbaren Leitschaufelkranz mit den Merkmalen des Patentanspruchs 8 und durch eine Strömungsmaschine mit den Merkmalen des Patentanspruchs 9.

Ein erfindungsgemäßer segmentierter Dichtungsträger einer Strömungsmaschine hat eine Vielzahl von Segmenten, die zusammengesetzt einen Dichtungsträger bilden und die innenumfangseitig als Einlaufbelege ausgebildete Dichtelemente aufweisen. Erfindungsgemäß sind die Dichtelemente einstückig mit den Segmenten ausgebildet und mindestens zwei Segmente sind mit ihren gegenüberliegenden korrespondierenden seitlichen Kontaktbereichen im montierten Zustand formschlüssig miteinander verbunden. Die Segmente sind spielfrei miteinander verhakt.

Durch das formschlüssige Verbinden einzelner Segmente stützen sich diese gegenseitig und die Steifigkeit des Dichtungsträgers wird erhöht. Dem Chording-Effekt wird somit wirksam entgegengewirkt. Trotz der Segmentierung wird somit ein erhöhter Einlauf der Dichtfins in Dichtelemente des Dichtungsträgers verhindert. Bevorzugterweise sind die Segmente lösbar miteinander verbunden, so dass eine zerstörungsfreie Demontage möglich ist. Der erfindungsgemäße Formschluss ermöglicht somit eine Segmentierung des Dichtungsträgers in mehr als zwei 180°-Segmente bzw. in mehr als zwei Halbringe. Beispielsweise kann der Dichtungsträger in sechs Segmente unterteilt werden. Die Segmente können dabei sechs gleich große 60°-Segmente oder auch unterschiedliche Umfangswinkel umspannen. Der Dichtungsträger wird bevorzugterweise mittels eines generativen Herstellungsverfahrens wie selektivem Lasersintern hergestellt. Hierdurch kann der Dichtungsträger strukturell und geometrisch optimal an seinen jeweiligen Einbauort bzw. die Größe des Leitschaufelkranzes angepasst werden. Zudem ermöglicht eine generative Herstellung die integrale bzw. einstückige Ausbildung der Kontaktbereiche bzw. deren formschlüssigen Verbindungen, so dass auch diese auf die jeweilige Ringgröße und dergleichen optimal abgestimmt werden können.

"Spielfrei" bedeutet, dass die Segmente im montierten Zustand gegenseitig verspannt sind. Durch die Verspannung wird bei Krafteinwirkung auf eines der Segmente, bspw. in Folge einer thermischen Ausdehnung, die Spannkraft erhöht. Hierdurch wird der mechanische Formschluss verbessert und die Verhakung bzw. Verbindung der Segmente zueinander unterstützt. Durch die Spielfreiheit wird die Steifigkeit des segmentierten Dichtungsträgers weiter erhöht und hierdurch eine Wölbung des Innenrings verhindert.

Bevorzugterweise sind die Segmente hilfsmittelfrei miteinander verbunden. "Hilfsmittelfrei" bedeutet, dass zur Bildung der formschlüssigen Verbindung bzw. Verhakung von benachbarten Segmenten keine Hilfsmittel, Zusatzelemente bzw. separate Elemente wie Schrauben, Keilelemente und dergleichen erforderlich sind. Durch den Verzicht auf Hilfsmittel wie Keile und Schrauben und dergleichen lässt sich der Dichtungsträger montagetechnisch mit geringem Aufwand montieren und demontieren. Zudem ist der Dichtungsträger durch den Wegfall der Hilfsmittel kompakt ausführbar, da ein separater Bau- bzw. Montageraum für Hilfsmittel entfällt. Ferner lässt sich durch den Wegfall der Hilfsmittel das Gesamtgewicht des Dichtungsträgers reduzieren.

Bei einem Ausführungsbeispiel haben die Kontaktbereiche jeweils einen Innenabschnitt und einen Außenabschnitt, wobei die Innenabschnitte im montierten Zustand gegeneinander gepresst und die Außenabschnitte voneinander beabstandet sind. Hierdurch wird zum einen erreicht, dass sich die Segmente quasi auf einer, einen Kraftfluss begünstigenden Kreisbahn abstützen. Zum anderen ermöglicht die Beabstandung eine Ausschwenkbewegung und somit eine zerstörungsfrei Demontage der Halbringe.

Die Innenabschnitte können in radialer Richtung verlaufende Innenflächen haben. Durch die radiale Orientierung der Innenflächen wird eine gegenseitige Lagestabilisierung der Segmente gefördert, da keine der Segmente Flächen und dergleichen aufweist, die zu einem radialen Versatz führen können.

Die Montage der Segmente zum Dichtungsträger lässt sich vereinfachen, wenn die Außenabschnitte bogenförmige Außenflächen haben. Durch die Bogenflächen wird ein Einschwenken der Segmente in einer Bogenbahn ermöglicht, bis sich die Segmente gegenseitig in Anlage befinden. Gleichzeitig wird verhindert, dass die Verbindung der Segmente durch eine lineare radiale oder umfangsseitige Bewegung getrennt wird.

Bei einem Ausführungsbeispiel hat der Außenabschnitt eine größere radiale Höhe als der Innenabschnitt. Hierdurch wird die gegenseitige Abstützung der Segmente auf einen inneren Kreisbahn unterstützt.

Vorteilhafterweise bilden die Segmente zwei Halbringe des Dichtungsträgers, die miteinander formschlüssig verbindbar sind. Durch diese Maßnahme wird der Dichtungsring über eine Gehäustrennebene hinaus geschlossen und zusätzlich versteift. Zum Ausgleich von Bauteil- und Montagetoleranzen wird es bevorzugte, wenn der Halbringe in unterschiedlichen Raststellungen verhakbar sind

Die Montage des Dichtungsträgers lässt sich weiter vereinfachen, wenn Dichtelemente des Dichtungsträgers integral an den Segmenten ausgebildet sind. Durch die integrale Ausbildung erfolgt eine nahtlose Verbindung der Dichtelemente mit den Segmenten. Die Dichtelemente werden bei der Herstellung der Segmente unmittelbar mit ausgebildet. Durch diese Maßnahme entfällt zum einen eine einzelne Herstellung der Dichtungsträger sowie deren Befestigung an den Segmenten. Beispielhafte Dichtelemente sind Dichtwaben.

Ein bevorzugter verstellbarer Leitschaufelkranz hat einen Innenring zur radial inneren Lagerung seiner Leitschaufeln und einen erfindungsgemäßen Dichtungsträger. Ein derartiger Leitschaufelkranz ist mit geringem montagetechnischen Aufwand montier- und demontierbar.

Eine bevorzugte Strömungsmaschine hat einen erfindungsgemäßen Leitschaufelkranz. Eine derartige Strömungsmaschine zeichnet sich im Vergleich zu einer Strömungsmaschine mit einem herkömmlichen Leitschaufelkranz durch einen verbesserten Verdichterwirkungsgrad auf, da aufgrund des wirksam unterdrückten Chording- Effekts ein enger Radialspalt zwischen den Dichtelementen des Dichtungsträgers und den gegenüberliegenden rotorseitigen Dichtfins eingestellt werden kann.

Sonstige vorteilhafte Ausführungsbeispiele der Erfindung sind Gegenstand weiterer Unteransprüche.

Im Folgenden werden bevorzugte Ausführungsbeispiele der Erfindung anhand von stark vereinfachten schematischen Darstellungen näher erläutert. Es zeigen:
- Figur 1: eine Vorderansicht eines erfindungsgemäßen segmentierten Dichtungsträgers einer Strömungsmaschine mit Bezug zu rotorseitigen Dichtfins,
- Figur 2: einen Längsschnitt durch die Darstellung aus Figur 1,
- Figur 3: ein erstes Ausführungsbeispiel einer Verbindung von benachbarten Segmenten des Dichtungsträgers,
- Figur 4: ein zweites Ausführungsbeispiel einer Verbindung von benachbarten Segmenten des Dichtungsträgers, und
- Figur 5: ein Ausführungsbeispiel einer Verbindung von Halbringen des Dichtungsträgers.

Auch wenn der erfindungsgemäße Dichtungsträger im Folgenden im Bezug zu einem verstellbaren Leitschaufelkranz erläutert wird, ist die Anwendung des Dichtungsträgers nicht auf einen Leitschaufelkranz beschränkt, sondern die Beschreibung rein beispielhaft zu sehen. Grundsätzlich lässt sich jedes Element als Dichtungsträger auffassen, das eine Dichtung, wie beispielsweise einen Einlaufbelag zum Zusammenwirken mit gegenüberliegenden Dichtfins, trägt.

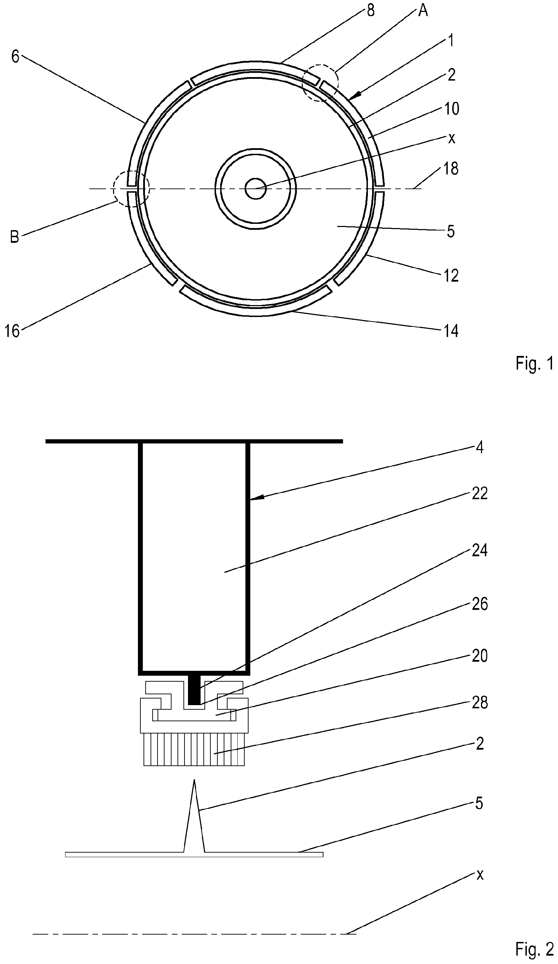

In den Figuren 1 und 2 ist stark vereinfacht eine Positionierung eines erfindungsgemäßen Dichtungsträgers 1 zu Dichtfins 2 in einer Strömungsmaschine, beispielsweise ein Flugtriebwerk, gezeigt. Der Dichtungsträger 1 bildet einen Teil eines verstellbaren Leitschaufelkranzes 4, der verdichterseitig in der Strömungsmaschine angeordnet ist. Die Dichtfins 2 sind rotorseitig angeordnet und als Stege ausgebildet, die einen um einen Längsachse x rotierenden Rotor 5 der Strömungsmaschine in Umfangsrichtung umgreifen.

Der Dichtungsträger 1 hat eine Vielzahl von Segmenten 6, 8, 10, 12, 14, 16, die im zusammengesetzten Zustand zwei Halbringe des Dichtungsträgers 1 bilden. In dem hier gezeigten Ausführungsbeispiel sind insgesamt sechs Segmente 6, 8, 10, 12, 14, 16 gezeigt, die jeweils einen Umfangswinkel von 60° umspannen. Zur Verdeutlichung der einzelnen Segmente 6, 8, 10, 12, 14, 16 sind diese in Figur 1 in Umfangsrichtung voneinander beabstandet gezeigt.

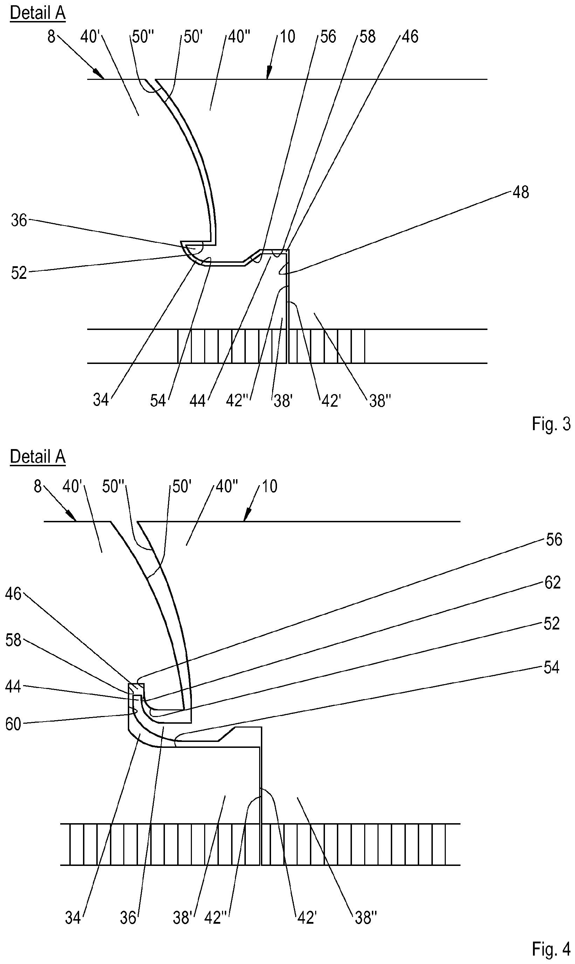

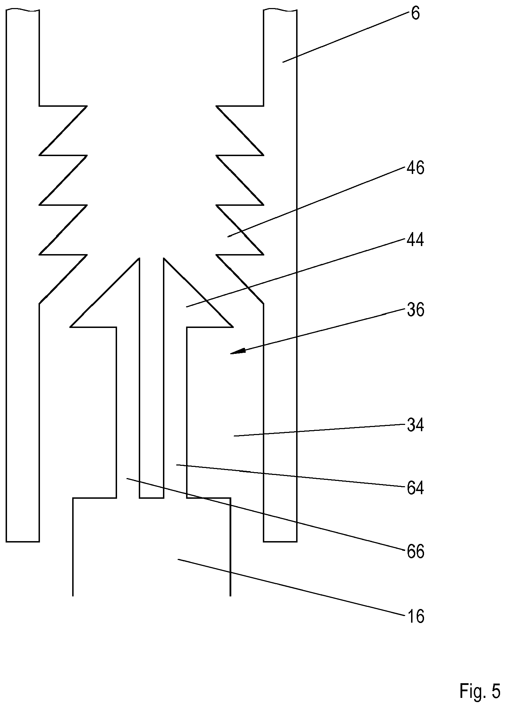

Ein Halbring besteht somit aus drei Segmenten 6, 8, 10 bzw. 12, 14, 16. Selbstverständlich sind auch mehr oder weniger als sechs Segmente 6, 8, 10, 12, 14, 16 vorstellbar, die den Dichtungsträger 1 bilden. Insbesondere können die Segmente 6, 8, 10, 12, 14, 16 auch unterschiedliche Umfangswinkel umspannen. Mit ihren Stoßstellen bzw. Kontaktbereichen liegen die Halbringe in einer Gehäusetrennebene 18 der Strömungsmaschine. Wie im Folgenden unter Bezugnahme auf die Figuren 3 und 4 noch erläutert wird, sind die Segmente 6, 8 bzw. 8, 10 bzw. 12, 14 bzw. 14, 16 im montierten Zustand des Dichtungsträgers 1 ohne Zuhilfenahme von Hilfsmitteln formschlüssig miteinander verbunden, spielfrei miteinander verhakt, insbesondere miteinander verspannt. Die jeweilige Verhakung bzw. Formschlussverbindung ist jeweils lösbar, so dass der jeweils zusammengesetzte Halbring auch wieder zerstörungsfrei demontiert werden kann. Die sich im Bereich der Gehäusetrennebene 18 gegenüberliegenden Segmente 6, 16 bzw. 10, 12 der Halbringe sind ebenfalls formschlüssig miteinander verbunden. Eine spielfreie Verhakung dieser Segmente 6, 16 bzw. 10, 12 ohne Hilfsmittel ist in Figur 5 erläutert. Die Segmente 6, 8, 10, 12, 14, 16 sind über den kompletten Dichtungsträger 1 ohne Hilfsmittel wie Keile, Schrauben und dergleichen spielfrei miteinander verhakt und somit miteinander verspannt.

Wie in Figur 2 gezeigt, ist der Dichtungsträger 1 rückseitig auf einen Innenring 20 des Leitschaufelkranzes 4 aufgeschoben. Der Innenring 20 besteht ebenfalls zumindest aus zwei Ringteilen und dient zur radial inneren Lagerung von verstellbaren Leitschaufeln 22 des Leitschaufelkranzes 4. Hierzu sind die Leitschaufeln 22 mit einem radial inneren Lagerungsabschnitt 24 in einer entsprechenden Aufnahme 26 des Innenrings 20 geführt. Eine radial äußere Lagerung der Leitschaufeln 22 sowie deren Betätigung erfolgt über nicht gezeigte Verstellzapfen der Leitschaufeln 22, die mit einer entsprechenden Verstelleinrichtung zusammenwirken. Vorderseitig hat der Dichtungsträger 1 als Einlaufbeläge ausgebildete Dichtelemente 28, beispielsweise in Form von Honigwaben, in die die Dichtfins 2 bei radialer Relativverschiebung des Rotors 5 in Folge von Flugmanövern und dergleichen einlaufen können.

Bevorzugterweise ist der Dichtungsträger 1 bzw. sind deren Segmente 6, 8, 10, 12, 14, 16 generativ hergestellte Bauteile. Ein beispielhaftes selektives Herstellungsverfahren ist das selektive Lasersintern. Sowohl die im Folgenden noch erläuterten seitlichen Kontaktbereiche der Segmente 6, 8, 10, 12, 14, 16, sowie die Dichtungselemente 28 sind integral bzw. einstückig mit den Segmenten 6, 8, 10, 12, 14, 16 ausgebildet. Die Segmente 6, 8, 10, 12, 14, 16 werden somit in einem Herstellungsschritt mit ihren Kontaktbereichen und mit den Dichtelementen 28 ausgebildet. Eine getrennte Herstellung beispielsweise der Dichtelemente 28 und deren nachträgliche Befestigung an den Segmenten 6, 8, 10, 12, 14, 16 entfällt.

In Figur 3 ist ein erstes Ausführungsbeispiel einer Verhakung von benachbarten Segmenten 6, 8 bzw. 8, 10 bzw. 12, 14 bzw. 14, 16 eines Halbrings gezeigt. Beispielhaft wird die Verhakung an den zueinander benachbarten Segmenten 8 und 10 aus Figur 1 erläutert (Detail A).

Zur Bildung der gegenseitigen Verhakung und bevorzugterweise der gegenseitigen Verspannung sind die jeweils gegenüberliegende Kontaktbereiche der Segmente 8, 10 korrespondierend zueinander bzw. miteinander formschlüssig verbindbar ausgebildet. Die Verhakung ist dabei derart, dass sie sowohl in Radialrichtung, als auch in Umfangsrichtung spielfrei zueinander angeordnet sind. Somit können die benachbarten Segmente nicht relativ zueinander in Radialrichtung verschoben werden.

In dem in den Figur 3 gezeigten Ausführungsbeispiel hat das linke Segment 8 eine umfangsseitige Vertiefung 34 und das rechte Segment 10 hat einen umfangsseitigen Vorsprung 36, mit dem es in die Vertiefung 34 eingreift. Die Vertiefung 34 bzw. der Vorsprung 36 unterteilt den jeweiligen Kontaktbereich in einen radial inneren Bereichsabschnitt bzw. in einen Innenabschnitt 38', 38" und in einen radial äußeren Bereichsabschnitt bzw. in einen Außenabschnitt 40', 40".

Der Innenabschnitt 38' des linken Segments 8 ist gegenüber seinem Außenabschnitt 38' in Umfangsrichtung verlängert ausgebildet, wohingegen der Innenabschnitt 38" des rechten Segments 10 gegenüber seinem Außenabschnitt 40" entsprechend zurückgestuft ausgebildet ist. Sich gegenüberliegende Innenflächen 42', 42" der Innenabschnitte 38', 38" sind eben ausgebildet und erstrecken sich in Radialrichtung. Zudem hat der linke Innenabschnitt 38' eine sich radial nach außen erstreckende Rastnase 44, die in eine korrespondierende Rastaufnahme 46 des rechten Segments 10 eingreift. Bevorzugterweise ist die Rastnase e44 endseitig des linken Innenabschnitts 38' derart angeordnet, dass sie einen Abschnitt der Innenfläche 42' bildet. Die Rastaufnahme 46 hat somit einen Flächenabschnitt 48, der einen Teil der rechten Innenfläche 42" bildet.

Die Außenabschnitte 40', 40" der Kontaktbereiche haben Außenflächen 50', 50", die entsprechend einer Einschwenkbewegung der Segmente 8, 10 relativ zueinander bogenförmig ausgebildet sind. Sie haben einen derart bevorzugterweise gleichmäßigen Bogenverlauf, dass die rechte Außenfläche 50" die linke Außenfläche 50' in Umfangsrichtung betrachtet überlappt. Die linke Außenfläche 50' ist somit von der Vertiefung 34 aus betrachtet bogenförmig zurückgesetzt und die rechte Außenfläche 50" ist vom Vorsprung 36 aus betrachtet bogenförmig vorspringend. Die Außenabschnitte 40', 40" haben zudem eine größere radiale Höhe als die Innenabschnitte 38', 38".

Im montierten Zustand ist der Vorsprung 36 in der Vertiefung 34 zwischen einer radial äußeren Vertiefungsfläche 52 und einer gegenüberliegenden radial inneren Vertiefungsfläche 54 angeordnet. Die Rastnase 44 ist in der Rastaufnahme 46 zwischen dessen Flächenabschnitt 48 und einer gegenüberliegenden hier schrägen Begrenzungsfläche 56 der Rastaufnahme 46 angeordnet. Die Begrenzungsfläche 56 ist dabei derart orientiert, dass die Rastaufnahme 46 vom Rastaufnahmengrund 58 aus radial nach innen erweitert wird, was ein Einschwenken der Segmente 8, 10 erleichtert.

In Kombination ist der Vorsprung 36 somit in Radialrichtung zwischen den Vertiefungsflächen 52, 54 angeordnet und die Rastnase 44 ist in Umfangsrichtung zwischen den Rastaufnahmeflächen 48, 56 angeordnet. Somit wird durch den Vorsprung 36 eine lineare Relativverschiebung der Segmente 8, 10 zueinander in Radialrichtung, und durch die Rastnase 44 eine lineare Relativverschiebung der Segmente 8, 10 in Umfangsrichtung wirkungsvoll verhindert. Ein Trennen der somit spielfrei miteinander verhakten Segmente 8, 10 ist nur durch eine Ausschwenkbewegung in Richtung der bogenförmigen Außenflächen 50', 50" möglich. Entsprechend ist ein Fügen der Segmente 8, 10 nur durch eine entsprechende Einschwenkbewegung möglich, die dadurch beendet wird, dass die beiden Segmente 8, 10 aufeinander auflaufen. Zum Ermöglichen einer Ausschwenkbewegung sind die Außenflächen 50', 50" im Zustand der Verhakung in Umfangsrichtung voneinander beabstandet.

In Figur 4 ist ein zweites Ausführungsbeispiel einer Verhakung von benachbarten Segmenten 6, 8 bzw. 8, 10 bzw. 12, 14 bzw. 14, 16 eines Halbrings gezeigt (Detail A). Beispielhaft wird auch hier die Verhakung an den zueinander benachbarten Segmenten 8 und 10 aus Figur 1 erläutert.

In Übereinstimmung mit dem ersten Ausführungsbeispiel nach Figur 3 hat das linke Segment 8 im Kontaktbereich eine Vertiefung 34 und das rechte Segment 10 einen in die Vertiefung 34 ragenden Vorsprung 36.

In weiterer Übereinstimmung mit dem ersten Ausführungsbeispiel nach Figur 3 haben auch bei dem zweiten Ausführungsbeispiel sich die gegenüberliegende Kontaktbereiche der Segmente 8, 10 Innenabschnitte 38', 38" mit radial verlaufende Innenflächen 42', 42" und Außenabschnitte 40', 40" mit Außenflächen 50', 50", die entsprechend einer Einschwenk- und Ausschwenkbewegung der Segmente 8, 10 bogenförmig ausgebildet sind.

Zudem ist der Innenabschnitt 38' des linken Segments 8 gegenüber dem Außenabschnitt 40' des linken Segments 8 in Umfangsrichtung vorstehend und der Innenabschnitt 40" des rechten Segments 10 gegenüber dem Außenabschnitt 40" des rechten Segments 10 entsprechend zurückgestuft.

Die Außenabschnitte 40', 40" haben zudem eine größere radiale Höhe als die Innenabschnitte 38', 38".

Im wesentlichen Unterschied zum ersten Ausführungsbeispiel nach Figur 3 sind eine Rastnase 44 des linken Segments 8 und eine korrespondierende Rastaufnahme 46 des rechten Segments 10 nicht im Bereich der Innenabschnitte 40', 40" ausgebildet. Die Rastnase 44 ist im zweiten Ausführungsbeispiel als ein radial nach außen gebogener Endabschnitt des Vorsprungs 36 ausgebildet. Die Rastaufnahme 46 ist als eine radial nach außen ausgeführte Vergrößerung der Vertiefung 34 ausgebildet. Die Vergrößerung ist dabei bevorzugterweise derart, dass ein Vertiefungsgrund 60 in Radialrichtung stufenlos in einen Rastaufnahmegrund 58 übergeht.

Eine Blockierung von einer radialen Relativbewegung der beiden Segmente 8, 10 zueinander ist durch den Vorsprung 36 in Zusammenwirken mit einer radial inneren Vertiefungsfläche 54 und im Zusammenwirken mit einer radial äußere Vertiefungsfläche 52 gegeben. Aufgrund einer insgesamt bogenförmigen radial nach außen gerichteten Form des Vorsprungs 36 ist die radial äußere Vertiefungsfläche 52 hier korrespondierend zur Konkavfläche 62 des Vorsprungs 36 bogenförmig.

Eine Blockierung von einer Relativbewegung der beiden Segmente 8, 10 in Umfangsrichtung aufeinander zu ist durch ein Zusammenwirken der beiden Innenflächen 40', 40" gegeben.

Eine Blockierung von einer Relativbewegung der beiden Segmente 8, 10 in Umfangsrichtung voneinander weg ist durch ein Zusammenwirken des als Rastnase 44 ausgebildeten Endabschnitts des Vorsprungs 36 mit einer dem Rastaufnahmegrund 58 gegenüberliegenden Begrenzungsfläche 56 der Rastaufnahme 46 gegeben.

In Figur 5 ist eine beispielshafte Verhakung der sich in der Gehäusetrennebene 18 gegenüberliegenden Segmente 10, 12 bzw. 6, 16 der Halbringe gezeigt (Detail B). Da beim Schließen des Gehäuses eine obere Gehäusehälfte auf einer unteren Gehäusehälfte abgesenkt wird, ist eine Einschwenkbewegung von korrespondierenden Formschlusselementen nicht möglich. Der Formschluss wird daher durch eine lineare Bewegung zwischen den sich gegenüberliegenden Segmenten 6, 16 bzw. 10, 12 hergestellt.

Beispielhaft wird im Folgenden das in Figur1 gezeigte linke untere Segment 16 mit dem linken oberen Segment 6 verhakt.

Das untere Segment 16 hat einen sich in Umfangsrichtung erstreckenden Vorsprung 36 mit einem pfeilförmigen Rastnase 44 als Kopfabschnitt. Das obere Segment 6 hat eine Vertiefung 34 als Aufnahme mit einer Vielzahl von in Umfangsrichtung hintereinander liegenden Rastaufnahmen 46, in die der Vorsprung 36 des unteren Segments 16 mit seiner Rastnase 44 jeweils einrasten kann.

Zum Ermöglichen eines Einrastens ist der Vorsprung 36 federnd ausgebildet. Der Vorsprung 36 ist hierzu in seine Längsrichtung quasi geschlitzt ausgebildet. Beispielsweise hat er zwei parallel verlaufende stiftartige Elemente 64, 66, die über einen Spalt voneinander beabstandet sind und an deren freien Enden jeweils hälftig die pfeilförmige Rastnase 44 ausgebildet ist.

Beim Absetzen der oberen Gehäusehälfte wird der Vorsprung 36 in die Vertiefung 34 eingefügt und verrastet in der Rastaufnahme 46, die einem Aufliegen der oberen Gehäusehälfte auf der unteren Gehäusehälfte entspricht. Somit sind auch die Halbringe des Dichtungsträgers 1 miteinander spielfrei in Umfangsrichtung und Radialrichtung des Dichtungsträgers 1 verhakt und der Dichtungsträger 1 ist über die Gehäusetrennebene 18 versteift. Hierdurch wird ein über seinen gesamten Umfang geschlossener bzw. verrasteter segmentierter Dichtungsträger 1 geschaffen, dessen Steifigkeit vergleichbar mit einem einteiligen Ring ist.

Offenbart ist ein segmentierter Dichtungsträger eines Leitschaufelkranzes einer Strömungsmaschine, mit einer Vielzahl von Segmenten, die zusammengesetzt zwei Halbringe des Dichtungsträgers bilden und die mit ihren gegenüberliegenden korrespondierenden seitlichen Kontaktbereichen miteinander verspannt sind.

### Bezugszeichenliste

- 1: Dichtungsträger
- 2: Dichtfin
- 4: Leitschaufelkranz
- 5: Rotor
- 6: Segment
- 8: Segment
- 12: Segment
- 14: Segment
- 16: Segment
- 18: Gehäusetrennebene
- 20: Innenring
- 22: Leitschaufel
- 24: Lagerungsabschnitt
- 26: Aufnahme
- 28: Dichtungselemente
- 34: Vertiefung
- 36: Vorsprung
- 38': Innenabschnitt linkes Segments
- 38": Innenabschnitt rechten Segments
- 40': Außenabschnitt linkes Segments
- 40": Außenabschnitt rechten Segments
- 42': Innenfläche des linken Innenabschnitts
- 42": Innenfläche des rechten Innenabschnitts
- 44: Rastnase
- 46: Rastaufnahme
- 48: Flächenabschnitt
- 50': Außenfläche des linken Außenabschnitts
- 50": Außenfläche des rechten Außenabschnitts
- 52: radial äußere Vertiefungsfläche
- 54: radial innere Vertiefungsfläche
- 56: Begrenzungsfläche
- 58: Rastaufnahmegrund
- 60: Vertiefungsgrund
- 62: Konkavfläche
- 64: stiftförmiges Element
- 66: stiftförmiges Element

- x: Längsachse

## Patentansprüche

1. Segmentierter Dichtungsträger (1) einer Strömungsmaschine, mit einer Vielzahl von Segmenten (6, 8, 10, 12, 14, 16), die zusammengesetzt einen Dichtungsträger (1) bilden und die innenumfangseitig als Einlaufbeläge ausgebildete Dichtelemente (28) aufweisen, wobei die Dichtelemente (28) einstückig mit den Segmenten (6, 8, 10, 12, 14, 16) ausgebildet und mindestens zwei Segmente (6, 8, 10, 12, 14, 16) mit ihren gegenüberliegenden korrespondierenden seitlichen Kontaktbereichen im montierten Zustand miteinander formschlüssig verbunden sind, **dadurch gekennzeichnet, dass** die Segmente (6, 8, 10, 12, 14, 16) spielfrei miteinander verhakt sind.

2. Dichtungsträger nach Patentanspruch 1, wobei die Segmente (6, 8, 10, 12, 14, 16) hilfsmittelfrei miteinander verbunden sind.

3. Dichtungsträger nach Patentanspruch 1 oder 2, wobei die Kontaktbereiche jeweils einen Innenabschnitt (38', 38") und einen Außenabschnitt (40', 40") haben, wobei die Innenabschnitte (38', 38") im montierten Zustand gegeneinander gepresst und die Außenabschnitte (40', 40") voneinander beabstandet sind.

4. Dichtungsträger nach Patentanspruch 3, wobei die Innenabschnitte (38', 38") in radialer Richtung verlaufende Innenflächen (42', 42") haben.

5. Dichtungsträger nach Patentanspruch 3 oder 4, wobei die Außenabschnitte (40', 40") bogenförmige Außenflächen (50', 50") haben.

6. Dichtungsträger nach Patentanspruch 3, 4 oder 5, wobei der Außenabschnitt (40', 40") eine größere radiale Höhe als der Innenabschnitt (38', 38") hat.

7. Dichtungsträger nach einem der vorhergehenden Patentansprüche, wobei die Segmente (6, 8, 10, 12, 14, 16) zwei Halbringe des Dichtungsträgers (1) bilden, die miteinander formschlüssig verbindbar sind.

8. Verstellbarer Leitschaufelkranz (4) mit einem Innenring zur radial inneren Lagerung seiner Leitschaufeln (22) und mit einem Dichtungsträger (1) nach einem der vorhergehenden Patenansprüchen.

9. Strömungsmaschine mit einem Leitschaufelkranz (4) nach Patentanspruch 8.

## Claims

1. Segmented seal support (1) of a turbomachine, comprising a large number of segments (6, 8, 10, 12, 14, 16) which, when put together, form a seal support (1) and which have sealing elements (28) formed on the inner circumference as abradable coatings, the sealing elements (28) being formed integrally with the segments (6, 8, 10, 12, 14, 16) and at least two segments (6, 8, 10, 12, 14, 16) being interlockingly interconnected to their opposite corresponding lateral contact regions in the assembled state, **characterized in that** the segments (6, 8, 10, 12, 14, 16) are hooked together without play.

2. Seal support according to claim 1, wherein the segments (6, 8, 10, 12, 14, 16) are interconnected without tools.

3. Seal support according to either claim 1 or claim 2, wherein the contact regions each have an inner portion (38', 38") and an outer portion (40', 40"), wherein the inner portions (38', 38") are pressed against each other in the assembled state and the outer portions (40', 40") are mutually spaced apart.

4. Seal support according to claim 3, wherein the inner portions (38', 38") have radially extending inner surfaces (42', 42").

5. Seal support according to either claim 3 or claim 4, wherein the outer portions (40', 40") have arcuate outer surfaces (50', 50").

6. Seal support according to claim 3, 4 or 5, wherein the outer portion (40', 40") has a greater radial height than the inner portion (38', 38").

7. Seal support according to any of the preceding claims, wherein the segments (6, 8, 10, 12, 14, 16) form two half-rings of the seal support (1), which half-rings can be interlockingly interconnected.

8. Adjustable guide vane ring (4) comprising an inner ring for the radially inner mounting of its guide vanes (22) and comprising a seal support (1) according to one of the preceding claims.

9. Turbomachine comprising a guide vane ring (4) according to claim 8.

## Revendications

1. Porte-joint segmenté (1) d'une turbomachine, comportant une multiplicité de segments (6, 8, 10, 12, 14, 16) qui, une fois assemblés, forment un porte-joint (1) et qui présentent des éléments d'étanchéité (28) formés sur le côté périphérique intérieur comme revêtements abradables, les éléments d'étanchéité (28) étant formés d'une seule pièce avec les segments (6, 8, 10, 12, 14, 16), et au moins deux segments (6, 8, 10, 12, 14, 16) étant reliés l'un à l'autre par complémentarité de forme à l'état monté, avec leurs zones de contact latérales correspondantes opposées, **caractérisé en ce que** les segments (6, 8, 10, 12, 14, 16) sont accrochés les uns aux autres sans jeu.

2. Porte-joint selon la revendication 1, dans lequel les segments (6, 8, 10, 12, 14, 16) sont reliés les uns aux autres sans moyen auxiliaire.

3. Porte-joint selon la revendication 1 ou 2, dans lequel les zones de contact présentant chacune une partie intérieure (38', 38") et une partie extérieure (40', 40"), les parties intérieures (38', 38") étant pressées l'une contre l'autre à l'état monté, et les parties extérieures (40', 40") étant espacées l'une de l'autre.

4. Porte-joint selon la revendication 3, dans lequel les parties intérieures (38', 38") présentent des surfaces intérieures (42', 42") s'étendant dans un sens radial.

5. Porte-joint selon la revendication 3 ou 4, dans lequel les parties extérieures (40', 40") présentent des surfaces extérieures arquées (50', 50").

6. Porte-joint selon la revendication 3, 4 ou 5, dans lequel la partie extérieure (40', 40") a une hauteur radiale supérieure à la partie intérieure (38', 38").

7. Porte-joint selon l'une quelconque des revendications précédentes, dans lequel les segments (6, 8, 10, 12, 14, 16) forment deux demi-anneaux du porte-joint (1) qui peuvent être reliés l'un à l'autre par complémentarité de forme.

8. Couronne d'aubes directrices réglable (4) comportant un anneau intérieur destiné au montage radialement intérieur de ses aubes directrices (22), et comportant un porte-joint (1) selon l'une quelconque des revendications précédentes.

9. Turbomachine comportant une couronne d'aubes directrices (4) selon la revendication 8.
